# EUROPÄISCHE PATENTSCHRIFT

(11) **EP 0 831 302 B1**
(45) Veröffentlichungstag und Bekanntmachung des Hinweises auf die Patenterteilung: **19.12.2001**
(21) Anmeldenummer: 97116670.7
(22) Anmeldetag: 24.09.1997
(51) Int. Cl.: G01D 7/02, G06F 17/40, G05B 23/02

(54) **Verfahren zur grafischen Darstellung eines Funktionsverlaufs**
Method for the graphical representation of a function
Procédé pour la représentation graphique d'une fonction

(30) Priorität: 24.09.1996 DE 19639244
(43) Veröffentlichungstag der Anmeldung: 25.03.1998
(73) Patentinhaber: SIEMENS AKTIENGESELLSCHAFT, 80333 München (DE)
(72) Erfinder: Bögge, Michael, Dipl.-Ing., 91080 Spardorf (DE); Breunig, Michael, Dipl.-Ing., 91091 Grossenseebach (DE); Hüls, Hans-Michael, Dipl.-Ing., 91054 Erlangen (DE)

(56) Entgegenhaltungen:
- US-A- 4 616 320
- US-A- 5 255 365
- PATENT ABSTRACTS OF JAPAN vol. 008, no. 282 (P-323), 22. Dezember 1984 (1984-12-22) -& JP 59 147212 A (SHIMAZU SEISAKUSHO KK), 23. August 1984 (1984-08-23)

## Beschreibung

Die Erfindung bezieht sich auf ein Verfahren zur grafischen Darstellung eines Funktionsverlaufs y(x) in einem Koordinatensystem.

In einer Leitwarte zur Steuerung einer technischen Anlage, insbesondere einer Kraftwerksanlage, fallen ständig große Mengen verschiedener Meßwerte und Meldesignale an, die in ihrer Gesamtheit den Anlagen- oder Betriebszustand beschreiben. Das Bedienpersonal der Anlage steht vor der Aufgabe, die für den Betriebszustand jeweils relevanten Meßwerte oder Meßdaten zu identifizieren und ihre Werte in Bezug auf den Zustand der Anlage zu verfolgen, zu analysieren und zu interpretieren. Dabei ist die Prozeßführung in der Leitwarte über Bildschirme durch Normen und Richtlinien in Form von Vorschriften weitgehend festgelegt. Diese Vorschriften umfassen Symbole für Anlagenteile, wie z. B. Pumpen und Ventile, und für die Farbgebung der Anzeigen sowie für den Aufbau der Anzeigen eines Leitsystems. Zusätzlich zu den verschiedenen Anzeigen ist üblicherweise ein Anlagenschaltbild vorhanden, das die gesamte Anlage im Überblick darstellt.

Mit zunehmender Automatisierung und Komplexität einer derartigen technischen Anlage nimmt die Anzahl der als Prozeßparameter erfaßten Meßwerte und damit die Wahrscheinlichkeit einer fehlerhaften Interpretation durch das Bedienpersonal zu. Zudem sind bei der grafischen Darstellung der zeitlichen Entwicklung eines Meßwertes über einen längeren Zeitraum hinweg aufgrund der Darstellungsgenauigkeit der Ausgabemediums, beispielsweise eines Bildschirms oder eines Druckers, Einzelwerte der Kurven oftmals nicht mehr erkennbar. Dies kann dazu führen, daß wesentliche Einzelwerte eines relevanten Meßwerts, beispielsweise bei einer Grenzwertüberschreitung, nicht mehr als solche identifizierbar sind. Eine derartige Darstellung ist in diesem Fall nicht mehr aussagekräftig. Entsprechende Gegenmaßnahmen können somit erst verspätet eingeleitet werden.

Zeitserielle Datenkomprimierung ist schon bekannt. US-A-4616320 offenbart eine Komprimierung, wobei Datenwerte dann nicht aufgezeichnet werden, wenn die Abweichung vom lokalen Verlauf der Datenreihe weniger als ein vorbestimmter Betrag ist. US-A-5255365 offenbart ein Komprimierungsverfahren, bei dem die Anzahl von Meßwerten bis auf die maximale Auflösung eines Bildschirms reduziert wird. Die Datenmenge wird in gleich großen Gruppen aufgeteilt, und für jede Gruppe wird ein Wert zur Darstellung auf einem Bildschirm ermittelt.

Der Erfindung liegt die Aufgabe zugrunde, ein alternatives Verfahren zur grafischen Darstellung eines durch Wertepaare definierten Funktionsverlaufs y(x) in einem Koordinatensystem anzugeben, mit dem eine komprimierte und aussagekräftige Darstellung des Funktionsverlaufs y(x) gewährleistet ist.

Diese Aufgabe wird erfindungsgemäß gelöst, indem in einem Verdichtungsintervall der Variablen x der durch Wertepaare xᵢ, yᵢ definierten Funktionsverlauf y(x) repräsentiert wird durch Punkte P₁ᵢ=(x₁ᵢ,y_{Ai}), P₂ᵢ=(x₂ᵢ,yₘₐₓᵢ), P₃ᵢ=(x₃ᵢ,yₘᵢₙᵢ) und P₄ᵢ=(x₄ᵢ,y_{Ei}) oder durch Punkte P₁ᵢ=(x₁ᵢ,y_{Ai}), P₂ᵢ=(x₂ᵢ,yₘᵢₙᵢ), P₃ᵢ=(x₃ᵢ,yₘₐₓᵢ) und P₄ᵢ=(x₄ᵢ,y_{Ei}), wobei die Koordinaten der Punkte P₁ᵢ, P₂ᵢ, P₃ᵢ und P₄ᵢ ermittelt werden nach den Vorschriften:
x₁ᵢ wird gewählt als der Anfangswert der Variablen x im Verdichtungsintervall,
x₂ᵢ wird gewählt als die Summe aus x₁ᵢ und einem Viertel der Breite des Verdichtungsintervalls,
x₃ᵢ wird gewählt als die Summe aus x₁ᵢ und der Hälfte der Breite des Verdichtungsintervalls,
x₄ᵢ wird gewählt als die Summe aus x₁ᵢ und drei Vierteln der Breite des Verdichtungsintervalls,
y_{Ai} wird gewählt als der Wert des Funktionsverlaufs y(x) bei der kleinsten Variablen xᵢ, die noch innerhalb des Verdichtungsintervalls liegt,
yₘₐₓᵢ wird gewählt als der maximale Wert des Funktionsverlaufs y(x) derjenigen Variablen xᵢ, die innerhalb des Verdichtungsintervalls liegen, yₘᵢₙᵢ wird gewählt als der minimale Wert des Funktionsverlaufs y(x) derjenigen Variablen xᵢ, die innerhalb des Verdichtungsintervalls liegt, und
y_{Ei} wird gewählt als der Wert des Funktionsverlaufs y(x) bei der größten Variablen xᵢ, die noch innerhalb des Verdichtungsintervalls liegt.

Die Erfindung geht dabei von der Überlegung aus, daß eine komprimierte Darstellung des Funktionsverlaufs y(x) in einem Verdichtungsintervall lediglich eine besonders geringe Anzahl darzustellender Punkte aufweisen sollte. Die Darstellung von vier Punkten im Verdichtungsintervall hat sich dabei als besonders günstig erwiesen. Für eine besonders aussagekräftige Darstellung sollten einerseits der maximale und der minimale Wert dargestellt werden, die der Funktionsverlauf im Verdichtungsintervall annimmt. Um zudem einen Entwicklungstrend des Funktionsverlaufs zu verdeutlichen, sollten zusätzlich ein Anfangs- und ein Endwert des Funktionsverlaufs im Verdichtungsintervall dargestellt werden.

Vorteilhafte Ausgestaltungen der Erfindung sind Gegenstand der Unteransprüche.

Zweckmäßigerweise werden zwei im Hinblick auf die Variable x benachbarte Punkte bei ihrer Darstellung linear oder über eine Gerade verbunden. Bei einer derartigen Darstellungsweise ist der Trend des Funktionsverlaufs y(x) mit den zugehörigen Extremalwerten für das Bedienpersonal auf besonders einfache Weise erfaßbar.

Der gesamte darzustellende Bereich der Variablen x wird vorteilhafterweise in eine Anzahl von Verdichtungsintervallen unterteilt, innerhalb derer der Funktionsverlauf y(x) dann jeweils auf die genannte Art komprimiert wird. Die Breite der Verdichtungsintervalle wird dabei zweckmäßigerweise als das Vierfache des Verhältnisses aus gesamtem darzustellenden Variablenbereich und einer vorgebbaren Auflösung gewählt. Die Auflösung gibt dabei an, wieviel Punkte gleichzeitig nebeneinander auf einem Ausgabegerät, beispielsweise auf einem Bildschirm oder auf einem Drucker, darstellbar sind. Das Verhältnis aus gesamtem darzustellenden Variablenbereich und der vorgebbaren Auflösung gibt dabei in der Art eines Basisintervalls denjenigen Variablenbereich an, der aus Auflösungsgründen zu einem einzigen darzustellenden Punkt zu komprimieren ist. Ein Verdichtungsintervall mit der vierfachen Breite eines derartigen Basisintervalls ist also für die Darstellung von vier Punkten besonders geeignet.

Das Verfahren eignet sich besonders zur Darstellung des zeitlichen Verlaufs eines Meßwerts einer technischen Anlage. Dabei wird zweckmäßigerweise als Funktionsverlauf y(x) der gemessene Wert eines Prozeßparameters in Abhängigkeit von der Zeit als Variabler x dargestellt.

Die mit der Erfindung erzielten Vorteile bestehen insbesondere darin, daß durch die Darstellung von vier Punkten in einem Verdichtungsintervall, von denen einer einen Anfangszustand, einer einen Maximalwert, einer einen Minimalwert und einer einen Endzustand repräsentiert, ein Funktionsverlauf auf besonders aussagekräftige und für das Bedienpersonal besonders einfach analysierbare Weise komprimierbar ist.

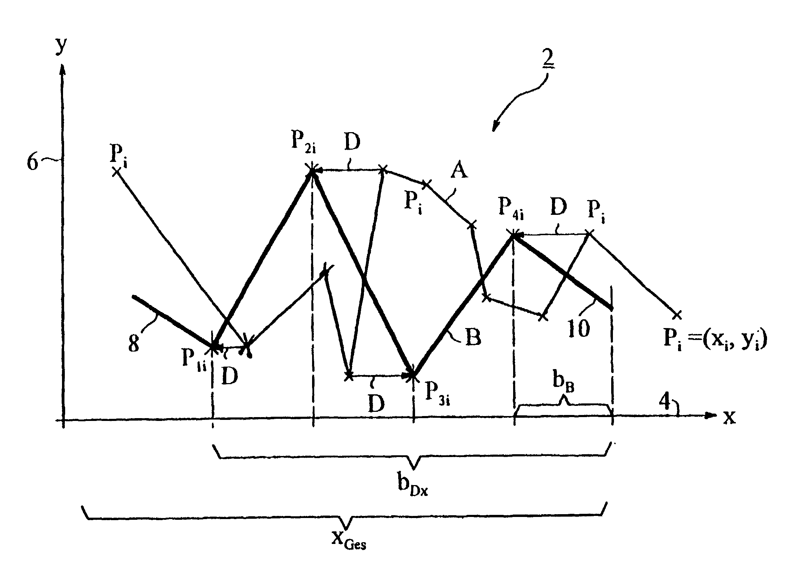

Ein Ausführungsbeispiel der Erfindung wird anhand einer Zeichnung näher erläutert. Darin zeigt die Figur schematisch ein Koordinatensystem mit einer einen tatsächlichen Funktionsverlauf repräsentierenden Kurve und mit einer eine komprimierte Darstellung des Funktionsverlaufs repräsentierenden Kurve.

Das in der Figur gezeigte Koordinatensystem 2 dient zur grafischen Darstellung eines Funktionsverlaufs y(x). Dazu sind im Koordinatensystem 2 Punkte Pᵢ anhand ihrer Koordinaten (xᵢ,yᵢ) darstellbar. Im Ausführungsbeispiel ist dabei als Funktionsverlauf y(x) der zeitliche Verlauf eines Meßwerts einer technischen Anlage, insbesondere der zeitliche Verlauf einer Dampftemperatur einer Kraftwerksanlage, darstellbar. Dazu ist auf der Abszisse 4 oder x-Achse des Koordinatensystems 2 die Zeit als Koordinate xᵢ eines Punktes Pᵢ darstellbar. Auf der Ordinate 6 oder y-Achse des Koordinatensystems 2 hingegen ist die Dampftemperatur an sich als Koordinate yᵢ eines Punktes Pᵢ repräsentiert. Das Koordinatensystem ist aber auch zur Darstellung eines beliebigen anderen Funktionsverlaufs y(x) geeignet.

Die im Koordinatensystem 2 gezeigte Kurve A repräsentiert als tatsächlichen Funktionsverlauf y(x) einen gemessenen zeitlichen Verlauf der Dampftemperatur der Kraftwerksanlage. Dazu sind Punkte Pᵢ gezeigt, die die zum jeweiligen Zeitpunkt xᵢ gemessene Dampftemperatur yᵢ angeben.

In Abhängigkeit vom Ausgabegerät, auf das das Koordinatensystem 2 zu seiner Darstellung ausgegeben werden soll, also beispielsweise einem Bildschirm oder einem Drucker, ist die Anzahl von in Richtung der Abszisse 4 nebeneinander darstellbaren Punkten Pᵢ begrenzt. Die maximale Anzahl nebeneinander darstellbarer Punkte Pᵢ mit jeweils unterschiedlicher Zeitkoordinate xᵢ wird auch als Auflösungsvermögen x_{A} bezeichnet. Aus dem Auflösungsvermögen x_{A} und der für die Erfassung eines Meßwerts erforderlichen Zeitspanne t_{E} ist ein insgesamt darstellbarer Zeitraum tₘₐₓ ermittelbar gemäß tₘₐₓ = t_{E} x_{A}. Mit anderen Worten: wenn nach jeweils einer Minute ein Wert für die Dampftemperatur gemessen wird (t_{E} = 1 min.), und wenn das Auflösungsvermögen 1000 Punkte beträgt (x_{A} = 1000), dann ist maximal ein Zeitraum von tₘₐₓ = 1000 min. darstellbar, ohne daß eine Komprimierung der Darstellung erforderlich wäre.

Falls ein Zeitraum von mehr als dem so ermittelten maximalen Zeitraum tₘₐₓ darzustellen ist, ist hingegen eine Komprimierung der Darstellung erforderlich. Für eine Komprimierung wird zunächst aus dem in der Figur durch eine Klammer charakterisierten darzustellenden Bereich x_{ges} und aus dem Auflösungsvermögen x_{A} eine ebenfalls durch eine Klammer angedeutete Basisintervallbreite b_{B} nach der Beziehung b_{B} = x_{ges}/x_{A} ermittelt. Die Basisintervallbreite b_{B} gibt dabei diejenige Zeitspanne an, für deren Darstellung im Koordinatensystem 2 aus Auflösungsgründen lediglich einer der Punkte Pᵢ zur Verfügung steht. Aus der Basisintervallbreite b_{B} wird sodann eine ebenfalls durch eine Klammer dargestellte Breite b_{Dx} für Verdichtungsintervalle Dₓᵢ gemäß der Beziehung b_{Dx} = 4 b_{B} gebildet.

Zur Komprimierung wird der gesamte darzustellende Bereich x_{ges} in eine Anzahl von Verdichtungsintervallen Dₓᵢ unterteilt. Die genaue Anzahl der dabei zu berücksichtigenden Verdichtungsintervalle Dₓᵢ ist dabei wie oben ausgeführt abhängig vom Auflösungsvermögen x_{A}.

Bei der komprimierten Darstellung wird der durch Wertepaare xᵢ, yᵢ definierte Funktionsverlauf y(x) in jedem Verdichtungsintervall Dₓᵢ repräsentiert durch jeweils vier Punkte P₁ᵢ, P₂ᵢ, P₃ᵢ und P₄ᵢ, wobei jeweils benachbarte Punkte durch Geraden miteinander verbunden werden. Die Koordinaten (x₁ᵢ,y_{Ai}), (x₂ᵢ,yₘₐₓᵢ), (x₃ᵢ,yₘᵢₙᵢ) und (x₄ᵢ,y_{Ei}) der Punkte P₁ᵢ, P₂ᵢ, P₃ᵢ bzw. P₄ᵢ werden dabei nach folgenden Vorschriften ermittelt:
x₁ᵢ wird gewählt als der Anfangswert der Variablen x im Verdichtungsintervall Dₓᵢ,
x₂ᵢ wird gewählt als die Summe aus x₁ᵢ und 0.25b_{Dx},
x₃ᵢ wird gewählt als die Summe aus x₁ᵢ und 0.5b_{Dx},
x₄ᵢ wird gewählt als die Summe aus x₁ᵢ und 0.75b_{Dx}
y_{Ai} wird gewählt als der Wert des Funktionsverlaufs y(x) bei der kleinsten Variablen xᵢ, die noch innerhalb des Verdichtungsintervalls Dₓᵢ liegt,
yₘₐₓᵢ wird gewählt als der maximale Wert des Funktionsverlaufs y(x) derjenigen Variablen xᵢ, die innerhalb des Verdichtungsintervalls Dₓᵢ liegen,
yₘᵢₙᵢ wird gewählt als der minimale Wert des Funktionsverlaufs y(x) derjenigen Variablen xᵢ, die innerhalb des Verdichtungsintervalls Dₓᵢ liegt, und
y_{Ei} wird gewählt als der Wert des Funktionsverlaufs y(x) bei der größten Variablen xᵢ, die noch innerhalb des Verdichtungsintervalls Dₓᵢ liegt.

Die Umsetzung dieser Vorschriften bei der Komprimierung der Darstellung ist in der Figur durch die Pfeile D symbolisiert. Alternativ kann auch vorgesehen sein, daß die Punkte P₂ᵢ und P₃ᵢ die nach der genannten Vorschrift ermittelten Koordinaten (x₂ᵢ,yₘᵢₙᵢ) bzw. (x₃ᵢ,yₘₐₓᵢ) aufweisen.

Die aus der Komprimierung resultierende, den tatsächlichen Funktionsverlauf y(x) annähernde Darstellung für ein ausgewähltes Verdichtungsintervall Dₓᵢ ist in der Figur als Kurve B gekennzeichnet. Die Punkte P₁ᵢ und P₄ᵢ des dargestellten Verdichtungsintervalls Dₓᵢ sind jeweils über eine Gerade 8 bzw. 10 mit dem letzten Punkt P₄ᵢ₋₁ des vorhergehenden Verdichtungsintervalls Dₓᵢ₋₁ bzw. mit dem ersten Punkt P₁ᵢ₊₁ des nachfolgenden Verdichtungsintervalls Dₓᵢ₊₁ verbunden.

Bei dieser Darstellung ist sichergestellt, daß bei einer zuverlässigen Komprimierung dem Bedienpersonal alle für den Anlagenprozeß relevanten Daten angezeigt werden. Die komprimierte Darstellung ist somit besonders aussagekräftig. Insbesondere werden die Extremalwerte des Funktionsverlaufs y(x) für jedes Verdichtungsintervall Dₓᵢ dargestellt, so daß auch Über- oder Unterschreitungen von Grenzwerten sicher erkennbar sind.

## Patentansprüche

1. Verfahren zur grafischen Darstellung eines durch Wertepaare (xᵢ, yᵢ) definierten Funktionsverlaufs (y(x)) in einem Koordinatensystem, bei dem in einem Verdichtungsintervall (Dₓᵢ) der Variablen (x) mit der Breite b_{Dx} der Funktionsverlauf (y(x)) repräsentiert wird durch Punkte P₁ᵢ=(x₁ᵢ,y_{Ai}), P₂ᵢ=(x₂ᵢ,yₘₐₓᵢ), P₃ᵢ=(x₃ᵢ,yₘᵢₙᵢ) und P₄ᵢ=(x₄ᵢ,y_{Ei}) oder durch Punkte P₁ᵢ=(x₁ᵢ,y_{Ai}), P₂ᵢ=(x₂ᵢ,yₘᵢₙᵢ), P₃ᵢ=(x₃ᵢ,yₘₐₓᵢ) und P₄ᵢ=(x₄ᵢ,y_{Ei}), wobei die Koordinaten der Punkte P₁ᵢ, P₂ᵢ, P₃ᵢ und P₄ᵢ ermittelt werden nach den Vorschriften:
x₁ᵢ wird gewählt als der Anfangswert der Variablen (x) im Verdichtungsintervall (Dₓᵢ),
x₂ᵢ wird gewählt als die Summe aus x₁ᵢ und 0.25b_{Dx},
x₃ᵢ wird gewählt als die Summe aus x₁ᵢ und 0.5b_{Dx},
x₄ᵢ wird gewählt als die Summe aus x₁ᵢ und 0.75b_{Dx},
y_{Ai} wird gewählt als der Wert des Funktionsverlaufs (y(x)) bei der kleinsten Variablen (xᵢ), die noch innerhalb des Verdichtungsintervalls (Dₓᵢ) liegt,
yₘₐₓᵢ wird gewählt als der maximale Wert des Funktionsverlaufs (y(x)) derjenigen Variablen (xᵢ), die innerhalb des Verdichtungsintervalls (Dₓᵢ) liegen,
yₘᵢₙᵢ wird gewählt als der minimale Wert des Funktionsverlaufs (y(x)) derjenigen Variablen (xᵢ), die innerhalb des Verdichtungsintervalls (Dₓᵢ) liegen, und
y_{Ei} wird gewählt als der Wert des Funktionsverlaufs (y(x)) bei der größten Variablen (xᵢ), die noch innerhalb des Verdichtungsintervalls (Dₓᵢ) liegt.

2. Verfahren nach Anspruch 1, bei dem die Punkte P₁ᵢ und P₂ᵢ, die Punkte P₂ᵢ und P₃ᵢ sowie die Punkte P₃ᵢ und P₄ᵢ jeweils linear verbunden werden.

3. Verfahren nach Anspruch 1 oder 2, bei dem der gesamte darzustellende Bereich (x_{ges}) der Variablen (x) in eine Anzahl von Verdichtungsintervallen (Dₓᵢ) unterteilt wird.

4. Verfahren nach einem der Ansprüche 1 bis 3, bei dem die Breite (b_{Dx}) des oder jedes Verdichtungsintervalls (Dₓᵢ) aus dem gesamten darzustellenden Bereich (x_{ges}) der Variablen (x) und einer vorgebbaren Variablenauflösung (x_{A}) gemäß der Beziehung b_{Dx} = 4x_{ges}/x_{A} gebildet wird.

5. Verfahren nach einem der Ansprüche 1 bis 4, bei dem als Funktionsverlauf (y(x)) die zeitliche Entwicklung eines Meßwerts einer technischen Anlage dargestellt wird.

## Claims

1. Method for the graphical representation of a function (y(x)) defined by value pairs (xᵢ, yᵢ) in a coordinate system, in which in a compression interval (Dₓᵢ) of the variable (x) with the width b_{Dx} the function (y(x)) is represented by points P₁ᵢ = (x₁ᵢ, y_{Ai}), P₂ᵢ = (x₂ᵢ, yₘₐₓᵢ), P₃ᵢ = (x₃ᵢ, yₘᵢₙᵢ) and P₄ᵢ = (x₄ᵢ, y_{Ei}) or by points P₁ᵢ = (x₁ᵢ, y_{Ai}), P₂ᵢ = (x₂ᵢ, yₘᵢₙᵢ), P₃ᵢ = (x₃ᵢ, yₘₐₓᵢ) and P₄ᵢ = (x₄ᵢ, y_{Ei}), the coordinates of the points P₁ᵢ, P₂ᵢ, P₃ᵢ and P₄ᵢ being determined according to the following rules:
x₁ᵢ is chosen as the initial value of the variable (x) in the compression interval (Dₓᵢ),
x₂ᵢ is chosen as the sum of x₁ᵢ and 0.25b_{Dx},
x₃ᵢ is chosen as the sum of x₁ᵢ and 0.5b_{Dx},
x₄ᵢ is chosen as the sum of x₁ᵢ and 0.75b_{Dx},
y_{Ai} is chosen as the value of the function (y(x)) in the case of the smallest variable (xᵢ) that still lies within the compression interval (Dₓᵢ),
yₘₐₓᵢ is chosen as the maximum value of the function (y(x)) of those variables (xᵢ) that lie within the compression interval (Dₓᵢ),
yₘᵢₙᵢ is chosen as the minimum value of the function (y(x)) of those variables (xᵢ) that lie within the compression interval (Dₓᵢ), and
y_{Ei} is chosen as the value of the function (y(x)) in the case of the largest variable (xᵢ) that still lies within the compression interval (Dₓᵢ).

2. Method according to claim 1, in which the points P₁ᵢ and P₂ᵢ, the points P₂ᵢ and P₃ᵢ, and the points P₃ᵢ and P₄ᵢ are connected linearly in each case.

3. Method according to claim 1 or 2, in which the entire range (x_{ges}) of variables (x) to be represented are divided into a number of compression intervals (Dₓᵢ).

4. Method according to one of claims 1 to 3, in which the width (b_{Dx}) of the or each compression interval (Dₓᵢ) is formed from the entire range (x_{ges}) of variables (x) to be represented and a specifiable variable resolution (x_{A}) according to the relation b_{Dx} = 4x_{ges}/x_{A}.

5. Method according to one of claims 1 to 4, in which the temporal development of a measured value of a technical installation is represented as the function (y(x)).

## Revendications

1. Procédé pour représenter graphiquement le tracé (y(x)) d'une fonction définie par des couples (xᵢ, yᵢ) de valeurs dans un système de coordonnées, dans lequel le tracé (y(x)) de la fonction est représenté dans un intervalle (Dₓᵢ) de subdivision des variables (x) ayant la largeur b_{Dx} par des points P₁ᵢ=(x₁ᵢ, y_{Ai}), P₂ᵢ=(x₂ᵢ, yₘₐₓᵢ), P₃ᵢ=(x₃ᵢ, yₘᵢₙᵢ) et P₄ᵢ=(x₄ᵢ, y_{Ei}) ou par des points P₁ᵢ=(x₁ᵢ, y_{Ai}), P₂ᵢ=(x₂ᵢ, yₘᵢₙᵢ), P₃ᵢ=(x₃ᵢ, yₘₐₓᵢ) et P₄ᵢ=(x₄ᵢ, y_{Ei}), les coordonnées des points P₁ᵢ, P₂ᵢ, P₃ᵢ et P₄ᵢ étant déterminées suivant les prescriptions :
x₁ᵢ est choisie comme valeur de départ des variables (x) dans l'intervalle (Dₓᵢ) subdivision,
x₂ᵢ est choisie comme la somme de x₁ᵢ et 0,25b_{Dx},
x₃ᵢ est choisie comme la somme de x₁ᵢ et 0,5b_{Dx},
x₄ᵢ est choisie comme la somme de x₁ᵢ et 0,75b_{Dx},
y_{Ai} est choisie comme la valeur de la courbe (y(x)) de la fonction pour la plus petite variable (xᵢ) qui est encore à l'intérieur de l'intervalle (Dx₁) de subdivision,
yₘₐₓᵢ est choisie comme la valeur maximale de la courbe (y(x)) de la fonction des variables (xᵢ) qui se trouvent à l'intérieur de l'intervalle (Dₓᵢ) de subdivision,
yₘᵢₙᵢ est choisie comme la valeur minimale de la courbe (y(x)) de la fonction des variables (xᵢ) qui se trouvent à l'intérieur de l'intervalle (Dₓᵢ) de subdivision et
y_{Ei} est choisie comme la valeur de la courbe (y(x)) de la fonction pour la plus grande variable (xᵢ) qui se trouve encore à l'intérieur de l'intervalle (Dₓᵢ) de subdivision.

2. Procédé suivant la revendication 1, dans lequel les points P₁ᵢ et P₂ᵢ, les points P₂ᵢ et P₃ᵢ ainsi que les points P₃ᵢ et P₃ᵢ sont reliés respectivement linéairement.

3. Procédé suivant la revendication 1 ou 2, dans lequel toute la région (X_{ges}) à représenter des variables (x) est subdivisée en une pluralité d'intervalles (Dₓᵢ) de subdivision.

4. Procédé suivant l'une des revendications 1 à 3, dans lequel la largeur (b_{Dx}) de l'intervalle ou des intervalles (Dₓᵢ) de subdivision est formée par toute la zone (x_{ges}) à représenter des variables (x) et par une résolution (x_{A}) de variables pouvant être prescrite à l'avance suivant la relation b_{Dx}=4x_{ges}/x_{A}.

5. Procédé suivant l'une des revendications 1 à 4, dans lequel le développement dans le temps d'une valeur de mesure d'une installation technique est représenté comme courbe (y(x)) d'une fonction.
